# EUROPEAN PATENT SPECIFICATION

(11) **EP 0 619 662 B1**
(45) Date of publication and mention of the grant of the patent: **15.10.2003**
(21) Application number: 94105048.6
(22) Date of filing: 30.03.1994
(51) Int. Cl.: H04L 12/28, H04L 29/06, H04B 7/26, G06K 9/22

(54) **Protocol for packet data communication system**
Protokoll für ein Paketdatenkommunikationssystem
Protocole pour système de communication de données par paquets

(30) Priority: 07.04.1993 US 44227; 01.07.1993 US 86675
(43) Date of publication of application: 12.10.1994
(73) Proprietor: SYMBOL TECHNOLOGIES, INC., Holtsville, New York 11742-1300 (US)
(72) Inventor: Tymes, LaRoy, Palo Alto, California 94306 (US); Ennis, Gregory B., Los Gatos, California 95032 (US)
(74) Representative: Wagner, Karl H., Dipl.-Ing.

(56) References cited:
- EP-A- 0 529 269
- US-A- 5 029 183

## Description

### BACKGROUND OF THE INVENTION

This invention relates to data communication systems, and more particularly to an RF packet communication system in which a number of remote units send data to a central computer via intermediate base stations.

In US-A-5,029,183, (referred to herein as "Pat. 5,029,183"), a packet data communication system is disclosed using a message-exchange protocol in which a base station only sends a message to a remote terminal in response to a message from the remote terminal. The remote terminal sends a message to the base station only at a time of its own choosing, so the transceiver of the remote terminal need not be continuously powered. The base station responds to a message from a remote terminal within a rigid time window following the message from the remote terminal. If there is a need to send a message originating at the base station (or at a central computer), then the base station must wait until a message is received from the remote before it can send the waiting message as part of its response in the fixed time window. The system of Pat. 5,029,183, in an example embodiment, employs spread spectrum RF transmission.

The system of Pat. 5,029,183 provides a great improvement in the power drain on a battery in a remote terminal, and thus allows construction of smaller, lighter, and cheaper remote terminals. To improve the communication channel from the base or central computer to the remote units, a way of periodically notifying the remote terminals that messages are waiting to be sent to them would reduce the average delay time between message initiation and message receipt. As disclosed in Pat. 5,029,183, this communication channel may be facilitated by having the remote units periodically (every half-minute or so) send a message to their base station, even though there is no new data to send, so that if a message to the remote is waiting it can be sent with the reply in the fixed window. This method provides two-way communication when only one side can originate messages, but it nevertheless requires the remote units to periodically energize their transmitters, and it adds to traffic on the RF medium.

EP-A-0 529 269 discloses a method and apparatus for conserving battery power in a wireless link adapter of a battery operated computer such as a portable laptop computer, as controlled by a scheduled multiaccess protocol. The portable computer is operable as a mobile unit in a multi-cell wireless network. The scheduled access multiaccess protocol is implemented to effectively conserve battery power by suitable control of the state of the controller, the transmitter and receiver units at the wireless link adapter by scheduling when the adapter is in a normal running mode, or a standby mode in which power is conserved. In particular, there is disclosed a method of conserving battery power in a wireless link adapter of battery powered portable computers operable in a multiaccess protocol for communications between a plurality of said portable computers and a base station via a wireless communications link, with said protocol including a designation of which ones of said plurality of said portable computers are to communicate with said base station; said method comprising the steps of partitioning a frame of said multiaccess protocol in to at least first and second subframes, each of which is divided into slots, with there being at least one slot assigned to each portable computer which is designated to communicate with said base station in each subframe, with the first subframe being allotted to communications from the base station to said portable computers, and with the second subframe being allotted to communications from said portable computers to said base station; turning ON said battery power for a receiver in said wireless link adapter of a given designated portable computer at least during said at least one time slot of the first subframe for receiving communications from said base station, with said battery power for said receiver in said wireless link adapter being turned OFF for the remaining time slots of said first subframe; and turning ON said battery power for a transmitter in said wireless link adapter of said given designated portable computer at least during said at least one time slot in said second subframe for transmitting communication from said given portable computer to said base station, with said battery power for said transmitter in said wireless link adapter being turned OFF for the remaining time slots of said second subframe.

It is a feature of the present invention to provide an improved, low-cost, low-power, packet data communication network in which a number of remote terminal units are in a form of two-way communication with a central station, preferably a network using an RF link or the like so that the remote units may move about freely in an area to be covered by the network. Another feature is to provide an improved packet transmission network in which remote terminal units may be of low cost, low power and small size, yet provide reliable and fast response, as may be needed in a commercial facility (usually indoor) using bar code scanners or the like for data gathering. Another feature is to provide an improved protocol for use in a packet data transmission network which results in reliable and high-performance operation, low power consumption and low cost implementation. A particular feature is to provide an RF data link for portable terminals usable without site licensing under F.C.C. regulations, so that the expense and delays incident to such licensing are eliminated or minimized. Another feature is to provide a method of reducing the delay between message initiation at a base terminal and message receipt at a remote terminal in a system in which only the remote terminals can originate message transmission.

### SUMMARY OF THE INVENTION

In accordance with one embodiment of the invention, a packet data communication system constructed generally as in Pat. 5,029,183 includes a number of remote terminal units for gathering data, and a communications link for sending packetized data to a central station and for receiving an acknowledge signal and data from the central station. A packet-exchange protocol ordinarily used for this communications link provides reduced power dissipation at the remote unit by activating the receive function for only a short time, rather than requiring the remote unit to receive or "listen" at all times. To this end, the standard exchange protocol establishes a rigid time window keyed to a transmission by the remote unit, and the remote unit is responsive to a message from the central station only during this time window. The time window is defined to begin at a fixed time delay after a transmission from the remote unit to the central station; at all other times, the receiver is not powered up, except for periodic "listen" times during which the remote listens for packets containing its ID code as one of the remotes for which messages are waiting. In the protocol of Pat. 5,029,183, and in the method of this invention, the central station cannot initiate a packet transmission to a remote unit, but instead must wait until the remote unit has sent a transmitted packet, then the central station can reply in the rigid time window, attaching to this base-to-remote packet or acknowledge signal the data it wishes to send to this remote unit. The remote units are low-cost, hand-held units in one embodiment, and so will be of lesser computational capacity than the central station, and power dissipation must be minimized. Accordingly, use of this protocol permits the receive function, and the computation function needed to decode received data, to be scheduled or managed by the remote unit rather than being slaved to the central unit.

In an illustrative embodiment, the central station includes a number of base stations located in different rooms or areas, with all of the base stations connected to a central computer, either by a wire connection or by a similar RF link. At any given time, a remote unit is assigned to only one of these base stations, and as the remote unit moves about it is reassigned to another base station. A feature of the protocol is to include an ID number for the remote unit in the transmitted packet, and to include this same ID number in the reply packet, so acknowledgement by an assigned base station is confirmed. But there need be no address or ID of the base station included in the protocol for communicating with the remote units, since a remote unit is assigned to only one base station, and the base station merely serves as a conduit for communicating with the central computer in any event.

The remote terminal units are, in one embodiment, hand-held bar code readers, and these units are coupled to the central station by an RF link so that the user is free to move about the area of the network. Usually the data packet being sent from the remote unit is the result of scanning a bar code symbol. The reply from the central station in this case would be a validation of the bar code information, or instructions to the user about what action to take regarding the package scanned by the hand-held unit.

In a preferred embodiment the RF link employs a spread spectrum modulation technique to send data packets from the remote terminals to the base stations and return. Spread spectrum methods utilize a transmitted bandwidth much wider than required for the data by adding some coded function to the data, then the received signal is decoded and remapped into the original information bandwidth. A particular advantage of this type of RF data link is that a band may be used which does not require site licensing by the F.C.C., yet it provides reliable, low cost communication from a light-weight, hand-held, battery-operated unit.

According to an important feature of this invention, the base station sends out an "announcement" as part of at least some of its "base-to-remote" packets (which were also sometimes referred to in Patent 5,083,129 as "acknowledge" packets). This "announcement" is a list of ID numbers (or other identification such as by a bit-map) of remote units for which messages are waiting to be sent by this base station. Each remote unit periodically listens (turns on its receiver) until it receives one of the packets containing an "announcement", i.e, a base-to-remote packet containing the list, and then searches the ID numbers in this list to see if a message is waiting at the base station for sending to this remote unit. If so, the remote sends a remote-to-base packet and receives the waiting message in the reply from the base. The remote may use a random timer to select a time for initiating this remote-to-base packet, so that all of the identified remotes receiving the message-waiting announcement will not try to send at the same time.

Instead of using the ID numbers in the "announcement" packet to identify the remote terminals which have messages waiting, the identification can be by a bit-map. Each remote unit serviced by a base station is, at start-up or log-on, assigned a unitary code number designated by a single one (a bit) in a field of zeros. If a given remote has a message waiting, then its unique bit position in the field will be set to one, if not it will be zero. So, the identification field in the announcement is a given-sized field having bits set for each one of the remotes that have messages waiting. This way, the entire ID numbers of all the remotes having messages waiting need not be sent, but instead a bit-map field is always sent in the announcement, with bits set for the remotes to be alerted. The size of the data field of the announcement packet is thus smaller, and is of fixed instead of variable size, making the decoding and interpretation easier.

While it is preferred that the announcement be part of a base-to-remote packet, so the other remotes receive the announcement by "eavesdropping" on routine traffic, an alternative is to also allow the base station to send a broadcast packet (not in response to a remote-to-base packet). This may be needed if a long period of time transpires with no remote-to-base packets occurring.

### BRIEF DESCRIPTION OF THE DRAWINGS

The features believed characteristic of the invention are set forth in the appended claims. The invention itself, however, as well as other features and advantages thereof, may best be understood by reference to the detailed description of a specific embodiment which follows, when read in conjunction with the accompanying drawings, wherein:
Figure 1 is an electrical diagram in block form of a packet data communication system according to one embodiment of the invention;
Figure 2 is timing diagram showing events (RF transmission) vs. time for a data transmission sequence in the system of Figure 1;
Figure 2a is timing diagram like Figure 2 showing events (RF transmission) vs. time for a data transmission sequence where a list of the IDs of remote units in the system of Figure 1 have messages awaiting transmission by a base station, according to this embodiment of the invention;
Figure 2b is a detail view of one of the announcement packets referred to in reference to Figure 2a;
Figure 3 is a more detailed electrical schematic diagram in block form of the host computer and one of the base stations in the system of Figure 1;
Figure 4 is a more detailed electrical schematic diagram in block form of one of the remote terminals in the system of Figure 1;
Figure 5 is a sectional view of a hand-held bar code scanner unit which may be used as the remote terminal according to one embodiment of the invention;
Figure 5a is a pictorial view of another type of bar code reader which may be used as the remote terminal instead of the laser scanner of Figure 5, according to another embodiment of the invention;
Figure 6 is a view of a part of a bar code symbol to be read by the remote unit of Figures 4 and 5, or of Figure 5a, and a timing diagram of the electrical signal produced thereby;
Figure 7 is an expanded view of part of the timing diagram of Figure 2; and
Figures 8a-8c are timing diagrams showing events vs. time occurring in the system of Figures 1 and 3-6 using the protocol of Figures 2 and 7.

### DETAILED DESCRIPTION OF A SPECIFIC EMBODIMENT

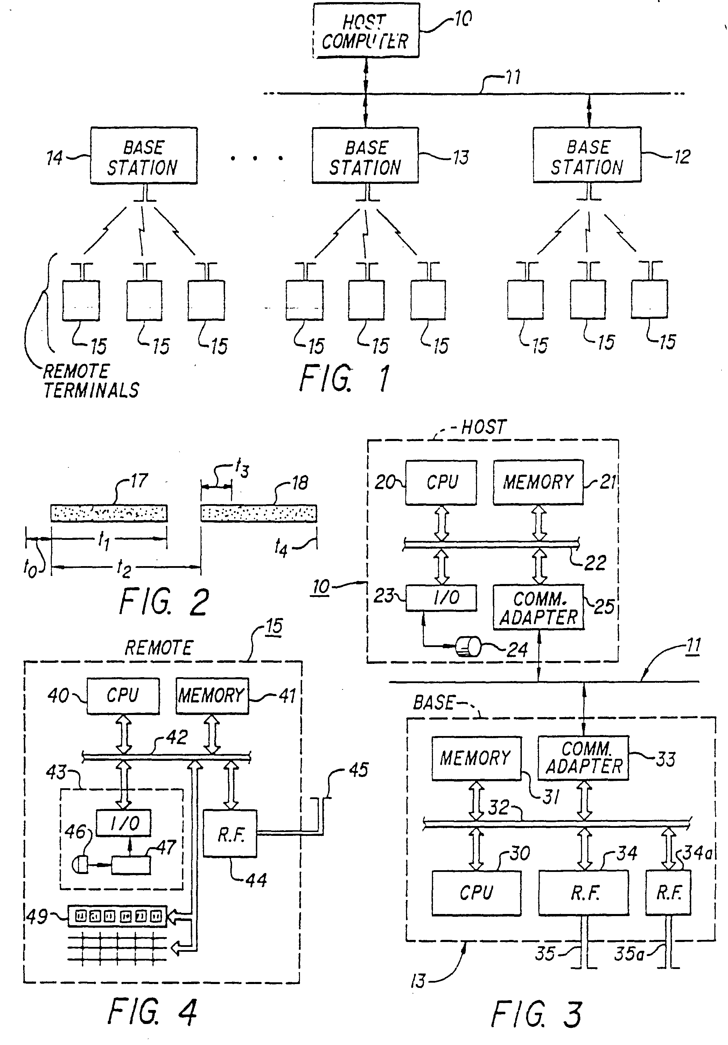

Referring to Figure 1, a data communications network according to one embodiment of the invention is illustrated. A host processor 10 is connected by a communications link 11 to a number of base stations 12 and 13; other base stations 14 can be coupled to the host through the base stations 12 or 13 by an RF link. Each one of the base stations 12, 13 or 14 is coupled by an RF link to a number of remote units 15. In one embodiment, the remote units 15 are laser-scan bar-code readers of the hand-held, battery-operated type as disclosed or referenced in Pat. 5,029,183, for example. Various other types of remote terminals may be advantageously employed in a system having features of the invention; these remote terminals ordinarily would include data entry facilities such as a keyboard or the like, as well as a display (or printer) for indicating to a user information detected, transmitted and/or received by this terminal 15. In this embodiment used as an illustrative example, there may be from one up to sixty-four of the base stations 12, 13 and 14 (three being shown in the Figure), and up to several hundred of the remote units 15; of course, the network may be expanded by merely changing the size of address fields and the like in the digital system, as will appear, but a limiting factor is the RF traffic and attendant delays in waiting for a quiet channel. This communications network as seen in Figure 1 would ordinarily be used in a manufacturing facility, office building complex, warehouse, retail establishment, or like commercial facility, or combination of these facilities, where the bar code readers or similar data-gathering terminals 15 would be used for inventory control in stockroom or receiving/shipping facilities, at checkout (point of sale) counters, for reading forms or invoices or the like, for personnel security checking at gates or other checkpoints, at time clocks, for manufacturing or process flow control, and many other such uses. Although hand-held, laser-scan type bar-code readers are mentioned, the data terminals 15 may also be bar-code readers of the wand type, and may be stationary rather than hand-held. The device may be of the optical character recognition (OCR) type, as well. Other types of data gathering devices may use the features of the invention, such as temperature or pressure measuring devices, event counters, voice or sound activated devices, intrusion detectors, etc.

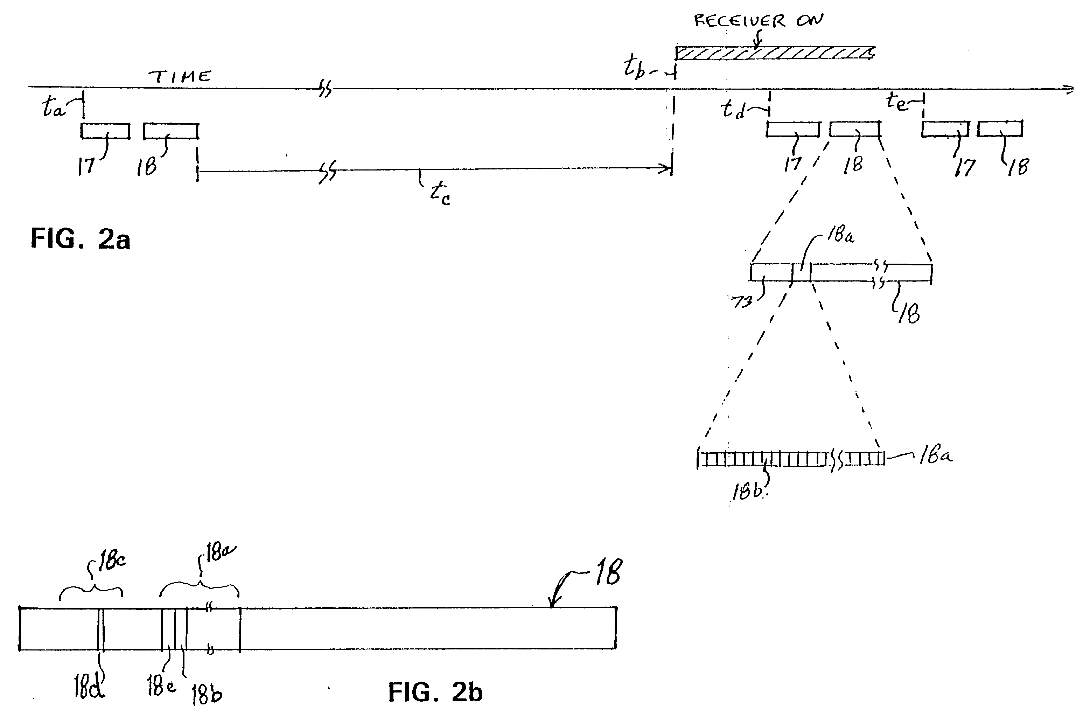

According to an important feature of one embodiment of Pat. 5,029,183, an RF packet communications protocol between the remote units 15 and the base stations 12, 13 and 14 includes a transmit/receive exchange, referred to hereinafter simply as an "exchange". This protocol is similar to collision-sense multiple-access (CSMA) in that a unit first listens before transmitting, and does not transmit if the channel is not free. As seen in Figure 2, this exchange always begins with a remote-to-base transmitted packet 17, representing an RF transmission from a remote unit 15 to be received by the base stations within range. The transmitted packet 17 is followed after a fixed time interval by a base-to-remote transmitted packet 18, representing reception by the remote unit 15 of RF information transmitted by the base station servicing this particular remote unit 15. Each of these packets 17 and 18 is of fixed timing; a transceiver in a remote unit 15 begins an exchange at its own initiative by first listening for other traffic for a brief interval t₀ (typically 0.3 msec), and, if the RF channel is quiet, starting a transmission at a time of its own selection (asynchronous to any clock period of the base stations or host computer). This outgoing transmission packet 17 lasts for a time t₁ as seen in the Figure, and in an example embodiment this period is 4.8 milliseconds. Then at a precise time delay t₂ after it started transmission (e.g., 5-msec after the beginning of t₁) the transceiver begins listening for the return packet 18 from the base station. The transceiver in the remote unit 15 only responds to receipt of the packet beginning in a very rigid time window t₃ of a few microseconds length, and if the packet 18 has not started during this window then anything to follow is ignored. The packet 18 is called a "base-to-remote" or "acknowledge" signal, and it may also contain data if the base station has any message waiting to be sent to this remote unit (as well as, in at least some packets, notice of ID numbers of any remote terminals who have messages waiting at the base terminal). The acknowledge packet 18 also is a maximum of 4.8 millisecond in length (in this embodiment), regardless of what data is included, if any, so a remote-to-base exchange, including acknowledge, takes about 9.8 msec in the example.

In the system of Pat. 5,029,183, the base stations 12, 13 and 14 ordinarily cannot initiate one of the exchanges of Figure 2, or initiate any other such transmission to the remote units 15. Instead, if a base station has a message waiting to be sent to a remote unit, the base station must wait until a packet 17 is received from this remote unit 15 for which this base station has a message waiting, then the data to be sent is included in the data portion of the return packet 18. For this reason, in the embodiment of Pat. 5,029,183, the remote units 15 were programmed to periodically, e.g., about every 500 msec or more, send a packet 17 to the base station with no data except its identifying code (traditionally called a NOP packet), so that the base station could send any data it has waiting in its memory for relay to this remote unit 15. According to a preferred embodiment of the present invention, however, the requirement for a periodic transmit to inquire for messages-waiting is alleviated by an improved protocol. A base station sends with at least some of the base-to-remote packets 18 an "announcement" which is an identification of the remote units 15 for which the base station has messages waiting. For example, the identification may be a list of the ID numbers of each one of the remote terminals 15 for which a base station has a message waiting. Alternatively, the identification may be a bit-map of the remotes having a message waiting.

Referring to Figure 2a, a given remote unit 15, if active in sending data fairly regularly, would routinely send a packet 17 at time tₐ, and receive an acknowledge packet 18 from the base station in reply, just as in Figure 2. This base-to-remote packet 18 may contain data waiting at the base station for transmission to this remote unit 15. If this remote was not very active, however, according to the present embodiment of the invention, it may at time t_{b}, after a delay of some preselected time t_{c} from its last exchange, turn on its receiver for a time and listen (i.e., "eavesdrop") for an exchange occurring between another (different) remote unit 15 and the base, say beginning at time t_{d}. In the acknowledge packet 18 for this exchange which starts at time t_{d}, there is an "announcement" which is a field 18a (part of the header or following the header) containing an identification of remote units 15 which have messages waiting at the base station. The given remote, upon decoding the packet 18 with the announcement field 18a (e.g., a list of IDs), searches the list for its ID number, and if found immediately initiates an exchange by a packet 17 starting at time tₑ so that it can receive the waiting message in the return packet 18 from the base. If there is no traffic at all from remote terminals, the base stations 12, 13, and 14 may also spontaneously generate these packets 18 with announcements fields 18a (i.e., not in response to any transmit packet 17, or as sometimes termed, a "broadcast") so as to ensure that a minimum time interval (e.g., one-half second or so, depending upon system requirements) is guaranteed as the minimum between successive base station transmissions. Thus, during quiet times when there is little message traffic from remote terminals 15, there will be periodic "announcement" packets 18 containing the fields 18a identifying remotes having messages awaiting transmission; these announcement packets 18 can be (1) part of routine responses to other remotes, or (2) broadcast packets, not in response to any packet 17 from a remote, i.e., if there are no packets 17 occurring for a specified time period. Each of the remote units 15 (which are all synched by local clocks) periodically activates its receiver during a period starting at time t_{b}, e.g., once every 500ms or so, and listens for the specified interval between base station self-generated transmissions, or until a routine exchange between another remote and the base occurs at time t_{d}. When a remote unit sees its ID in any one of these announcement fields 18a, the remote then initiates a NOP transmit packet 17 at time tₑ, and so it receives the waiting message in the response packet 18 from the base station.

Instead of using a list of the ID numbers of remote terminals 15 in field 18a of an announcement packet, to identify the remote terminals 15 which have messages waiting, the identification can be by means of a bit-map. Each remote unit 15 serviced by a base station 12, 13, or 14, is, at start-up or log-on, assigned a unitary code number designated by a bit position such as slot 18b in the expanded view of field 18a in Figure 2a. So this remote is identified by a single one (a bit) in a bit field. A remote unit 15 logging onto a base station might be assigned a number seven, which would be position "7" in a bit field, e.g., "XXXX...XX1XXXXXX". If a given remote unit has a message waiting, then its unique bit position in the field 18a will be set to one, if not it will be zero. So, the identification field 18a in the announcement is a given-sized field having bits 18b set to one for each one of the remotes 15 that has a message waiting. This way, the entire ID numbers of all of the remotes 15 having messages waiting need not be sent as the field 18a, but instead a fixed-size bit-map field is always sent in the announcement, with bits set for the remotes to be alerted. The size of the data field 18a of the announcement packet 18 is thus smaller, making the decoding and interpretation easier.

Referring to Figure 2b, a more detailed diagram of the packet 18 is illustrated for the embodiment of Figure 2a. In a control field 18c, a bit 18d is an announcement indicator, signalling the CPU decoding this packet that the packet contains an announcement. Then, within the announcement field 18a, a field 18e says how long the announcement field is going to be. Following this field 18 is the bit-map field containing the bits 18b as discussed above. By having the length field 18e, the announcement field can be truncated after the bit position of the largest numbered remote having a message waiting; for example, if the total number of remotes logged on is thirty-two, but no remote past number "7" has a message waiting, then the announcement field 18a need be only seven bits long, instead of thirty-two.

The frequency of the periodic "listen" by a remote is set to some default value, e.g., every 500 ms., but it can be also dynamically adjusted depending upon battery power usage to sacrifice performance in favor of power conservation. The base station monitors its own announcement packet generation so as to ensure that it is transmitting announcements 18a at a rate no less than a specified minimum. If the announcement rate drops below this minimum, the base station will generate a packet 18 containing only the header information and the announcement 18a; this assures that when a remote unit 15 powers up its receiver, it is guaranteed to receive an announcement from the base within a specified time period. When a remote unit 15 is identified in one of these announcements, and thus sends a packet 17 so it can receive the waiting data from the base, the data packet 18 can contain a "more" bit in its control field, so the remote knows to keep sending packets 17 until no more data is waiting; this removes the necessity for the remote to wait for another announcement.

Returning to a description of the "standard:" protocol, which is also used in this embodiment of the invention, to prevent another remote unit 15 from starting one of the exchanges of Figure 2 in the interval just after the transmit packet 17 but before the receive packet 18 has started, time t₀, the listening time, is generally chosen to be longer than the time interval between transmit packet 17 and receive packet 18 (0.2 msec in this example). If another remote unit 15 tries to initiate its own exchange it will receive the RF transmission and will back off and try again at least about 10-msec later. In the manner of CSMA protocols, the remote units 15 can be programmed to wait random time delays before retry, to thereby lessen the likelihood of simultaneous retries.

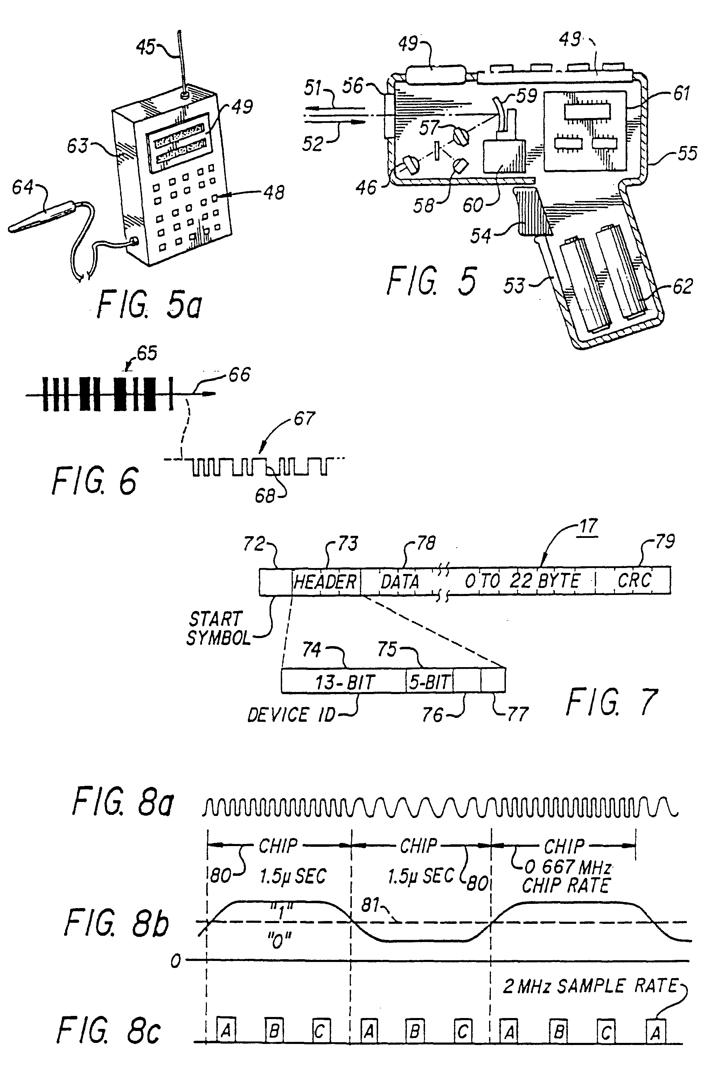

Referring to Figure 3, in a typical commercial or retail application of a network of Figure 1, the host processor 10 maintains a database management system (employing suitable database management software similar to that commercially available) to which the remote units 15 make entries or inquiries via the base stations 12, 13 and 14. The host processor 10 has a CPU 20 which may be an Intel microprocessor device, and the CPU accesses a memory 21 via a main bus 22 to execute instructions, with various I/O processors 23 used to access peripherals such as keyboard, video display, etc., as well as disk storage 24 for the database system and other computer functions. A communications adapter 25 couples the CPU 20 via main bus 22 to the link 11. This communications link 11 may be of the serial type, or in a system designed for higher performance the link 11 may use one of the available local area network type of protocols such as Ethernet or token ring, or may merely use serial port connected to a shared serial line 11, on a time-sharing basis (e.g., time slotted).

The base stations 12, 13 and 14 each utilize a CPU 30 which accesses a memory 31 via local bus 32, also seen in Figure 3. This data processing unit is coupled to the serial link 11 via a communications adapter 33. An RF transceiver 34 is coupled to the CPU 30 in each base station via the local bus 32 and is connected to an antenna 35 for RF transmission to and reception from the remote units 15 using the protocol of Figure 2. An additional RF transceiver 34a may be used, as well, as an RF link to and from other base stations, if necessary. An example of a microprocessor device is given in Pat. 5,029,183. The memory 31 includes ROM or EPROM for startup code executed by the CPU 30, as well as fast RAM for the program executed during normal operations and for buffering the digital data incoming from or outgoing to the RF transceiver 34.

The base stations 12, 13 and 14 are ordinarily located in various rooms or bays of the commercial establishment containing the network of Figure 1, or located in other such places not readily accessible to an operator, so usually a console with keyboard and display is not used; if, however, a base station is configured for desktop or wall mounting in an accessible location there may be I/O devices coupled to the bus 32 to allow local data entry or display. The base stations are usually powered by line current rather than being battery operated, and so there is less concern for power dissipation in these devices compared to that for the remote terminals 15. The RF signal path in this environment is changeable in nature as equipment, fork-lift trucks, furniture, doors, etc., are moved about, or as the user moves from place to place and carries the hand-held remote unit with him, or as the network is expanded or reduced in size; there is a high degree of multipathing in this type of RF link. Thus, the particular one of the base stations communicating at a given time with one of the remote units 15 may charge; to this end a "hand-off" protocol may be utilized, as described in Pat. 5,029,183, to change the base station which is designated to handle a remote unit. In this manner, a remote unit 15 has a confirmed virtual RF link with only one base station at a time, although others may be in range. The base station 12, 13 or 14 is merely an intermediary; the remote unit is communicating with the host processor 10, and the function of a base station is merely to relay the data from a remote unit to the host computer, or from the host computer to a remote unit. In a minimum-scale installation, there may be only one base station, in which case the communication link 11 may be a direct connection, or, if the building is such that the base station can be mounted at the same location as the host computer, the link 11 may be replaced by a parallel bus-to-bus interface, in which case the base station and host computer may be considered a single unit. When there are multiple base stations, the communications link 11 uses a protocol of adequate performance to allow each RF transmission (packet 17) from a remote unit 15 to be decoded in the base station and relayed to the host processor 10 via the link 11, then a reply sent back from the host computer 10 via the link 11 to the base station, so the base station can wait for another exchange for relay of the stored message to the remote unit 15 in a packet 18. This sequence should appear to a user (a person carrying the bar code reader) as essentially "real time", even though the actual delay may be hundreds of milliseconds. This short cycle is maintained even when the network includes a large number of the remote units 15 operating sporadically. Because of the RF protocol used, and the requirement that the RF link may be shared with a large number of remote units, the serial link 11 is much faster than an RF link via RF transceivers 34a and antennas 35a from one base station to another base station, and so the serial link 11 is used for messages between base stations whenever possible. The RF link is the example embodiment using the protocol as described has a data rate of less than one-tenth that of the serial link 11. Only when the physical layout, or the temporary nature of the network, demands this solution is the RF link from base to base employed.

Referring to Figure 4, each remote unit 15 in the example embodiment is a data terminal (e.g., a hand-held bar code reader) having a CPU 40 executing instructions from a program and data memory 41 which is coupled to the CPU via a local bus 42. A peripheral bar code data acquisition device 43 is coupled to the CPU via the bus 42 and used to detect and/or convert data from the bar code scanning section to be stored in the memory 41 and processed by the CPU 40; other control devices interface with the keyboard and display. An RF transceiver 44 is coupled to and controlled by the CPU via the bus 42, and transmits the coded RF signal through an antenna 45 or detects and converts RF received by the antenna, according to a protocol. In the example of the remote unit 15 being a laser-scan bar-code reader, the device 43 is used to input data from a photodetector device 46 which produces a serial electrical signal fed to a code recognition circuit 47 responding to the characteristic patterns of bar code symbols and providing bar code data to the memory 41 via device 43 when a bar code is scanned. The CPU 40 within the remote unit checks the bar code data for validity and format, by executing code stored in the memory 41, and, when the data packet has been prepared in the memory 41, the CPU initiates an RF transmission by activating the RF transceiver 44 and transferring the encoded packet containing the bar code data to the transceiver via bus 42. Usually the remote unit has a manual data entry device such as a keyboard 48, and a visual display 49 such as an LCD device; the elements of the keyboard and display are scanned by signals generated in the CPU 40, or generated in a keyboard and display I/O controller. An advantage of the protocol of Figure 2, however, is that the CPU 40 can handle all of these tasks, including data input from the bar code scanner, keyboard and display scan, RF control, datastream transfers to and from the RF, and data encoding and decoding, because the RF transmission and reception is under control of the remote unit rather than being scheduled by a higher level device such as the base station or the host computer. That is, an important feature is the ability of the remote unit 15 to schedule events and communicate with the base station at times of its own choosing, as this ability simplifies the tasks of the remote unit. Therefore, the components needed in the remote unit of Figure 4 are kept to a minimum for cost, size, weight and battery life considerations.

The CPU 40 in the remote unit 15 of Figure 4 may be an Intel microprocessor device, having an external bus 42, as described in Pat. 5,029,183.

Although other data terminal units 15 may be advantageously employed in a system having features of the invention, a hand-held, laser-scan, bar code reader unit as illustrated in Figure 5 is an example of a remote unit particularly suited for use in the system of Figure 1. This hand-held device of Figure 5 is generally of the style disclosed or referenced in Pat. 5,029,183. A outgoing light beam 51 is generated in the reader 15, and directed to impinge upon a bar code symbol in front of the reader unit. The outgoing beam 51 is scanned in a pattern, and the user positions the hand-held unit so this scan pattern traverses the symbol to be read. Reflected light 52 from the symbol is detected by a light-responsive device 46 in the reader unit, producing serial electrical signals to be processed for identifying the bar code. The reader unit 15 is a gun-shaped device having a pistol-grip type of handle 53, and a movable trigger 54 is employed to allow the user to activate the light beam 51 and detector circuitry when pointed at the symbol to be read, thereby saving battery life if the unit is self-powered. A light-weight plastic housing 55 contains the laser light source, the detector 46, the optics and signal processing circuitry, and the CPU 40 and RF transceiver 44 of Figure 2, as well as a battery. A light-transmissive window 56 in the front end of the housing 55 allows the outgoing light beam 51 to exit and the incoming reflected light 52 to enter.

As seen in Figure 5, a suitable lens 57 is used to collimate and focus the scanned beam into the bar code symbol at the proper depth of field, and used to focus the reflected light 52. A light source 58 is positioned to introduce a light beam into the axis of the lens 57 by a partially-silvered mirror and other lenses or beam-shaping structure as needed, along with an oscillating mirror 59 which is attached to a scanning motor 60 activated when the trigger 54 is pulled. The electronic components of Figure 4 are mounted on one or more small circuit boards 61 within the housing 55 of Figure 5, an batteries 62 are enclosed to provide a self-contained portable unit. The antenna 45 may be printed on one of the circuit boards 61.

Referring to Figure 5a, another embodiment of a remote terminal 15 is illustrated wherein a wand-type bar code reader is employed instead of the laser scanner of Figure 5. This device of Figure 5a is similar to a radio terminal as referenced in Pat. 5,029,183. The keyboard 48 and display 49 are mounted at the face of a hand-held housing 63, and the light source 58 (in this case an LED, for example) and light detector 46 (not seen in Figure 5a) are mounted within a pencil-shaped wand 64 connected to the housing 63 by a cable.

Referring to Figure 6, a part of a typical bar code symbol 65 is illustrated of the type read by the laser scanner of Figure 5, or by the wand-type reader of Figure 5a. In the case of a laser scanner, the laser scan beam 51 produces a scan line 66, and reflected laser light 52 detected by the photodetector 46 and shaped by the circuitry 47 produces a binary electrical signal 67 as also seen in Figure 6. Of interest are the transitions 68 in the signal 67 representing passage of the beam or light between light and dark areas or bars and spaces in the symbol 65 (dark produces a binary "0" and light a binary "1" in the illustration).

In a typical operation, a user may be located in a receiving or stock room of a commercial or industrial establishment, where this user would aim the remote unit 15 of Figure 5 at a bar code symbol 65 of Figure 6 on a package of interest and pull the trigger 54. This trigger pull initiates a scan operation wherein the laser diode 58 is activated, the scanning motor 60 is energized, the detector 46 is powered-up, and so bar code data is produced for entry to memory 41 via the data acquisition circuitry. This bar code data is loaded to memory 41 then the data may be processed to check for validity, and if valid then a data packet is defined in the memory 41 according to the protocol, then the RF transceiver 44 is activated by a command sent from the CPU 40, the encoded data packet is loaded to the transceiver 44 from the memory 41 in a sequence of bytes, and an RF transmission according to Figure 2 is initiated, i.e., listen during t₀ then transmit a packet 17 if quiet. The base station 12, 13 or 14 receives the RF transmission packet 17 from the remote unit 15, decodes it on the fly, checks for errors, sends an RF acknowledge signal packet 18 to the remote unit 15 during the precise time window, and reformats the data in memory 31 by instructions executed by the CPU 30 for sending to the host computer 10 via communications link 11. The packet 17 from the remote unit 15, or the acknowledge packet 18 from the base station, may contain instructions about when the remote is to initiate another exchange to get the answer to its inquiry. After receiving the data relayed by the base station, the host computer 10 performs whatever database transaction is needed, then sends a response back to the base station via link 11, which the base station holds in memory 31 for sending to the remote unit 15 when another exchange occurs using the protocol of Figure 2. When the remote unit 15 has received the data sent by the host computer in response to its inquiry (relayed via one of the base stations), some indication may be displayed to the user by the LCD display 49 on the hand-held unit of Figure 5, or of Figure 5a. For example, the data sent from the host computer 10 may tell the user of the remote unit 15 to take some action with respect to the package which had the bar code symbol on it just read by the trigger pull, i.e., place the package in a certain bin, etc. For this type of operation, the response time from trigger pull to the answer appearing on the display 49 should be short enough as to be hardly noticeable, e.g., one second or less.

The type of operations as just described place several requirements upon the system. First, the remote units should be relatively light in weight and small in size, and of course should not require a wire connection to the central station. Battery operation is thus dictated, but the batteries should not have to be large or heavy, and frequent recharging is to be avoided. Line-of-sight communications, as by an infrared link, are inconvenient in this environment because of obstructions and restrictions in field of view, so RF is preferred. An RF link often imposes the burden of F.C.C. regulations, both for restrictions on the equipment and components employed and frequency bands used, but also for licensing of individual users or sites. The effects of these requirements are minimized as will be seen.

A more detailed view of the contents of transmitted packets 17 or 18 is seen in Figure 7. The two packets 17 and 18 are the same in general format, so only one is shown. A packet 17 begins with a start signal 72 of fixed length which is used to give notice to the receiver that a packet is beginning and also to synch the receiver; in addition the start signal may be coded so that only base stations and remote units for this particular network will respond (there may be overlapping networks owned by different businesses). Next, a 3-byte header 73 is sent, and, as seen in the expansion view, the header contains a 13-bit device-identification field 74 or "handle"; each remote unit 15 also has a serial number of 24-bit length so no two remote units 15 need ever be manufactured having the same serial number, but to save needless transmission of data this field 74 is shortened to a 13-bit handle, allowing 2¹³ or 8192 remote units to be on one network with unique handles. This handle is given to the remote unit 15 during an initialization or power-up procedure when the remote unit is connected to a base or host by a direct cable. After the device-ID field 74, the header 73 includes a 5-bit "size" field 75 which says how many bytes of data are to follow, the permitted size being from zero to twenty-two bytes of data. Thus a "byte count" type of protocol is used, as has been used in previous packet-type serial communications protocols. The 5-bit "size" field 75 allows 2⁵ or thirty-two codes to be sent, but only twenty-three are needed for conveying the size information, so if no size information need be sent in a given packet then other commands or messages can be sent in this field, such as a NOP for merely signalling presence of a remote unit or for allowing the base station to send back data if any is waiting. Next, the header 73 contains two 3-bit fields 76 and 77 representing the record number and acknowledgement number, respectively; if an amount of data exceeding 22-bytes must be sent (as when downloading code from the host computer 10 to a remote unit 15 for execution by the remote's CPU 40 when changing operating modes, for example), then this data is split into 22-byte packets which are numbered consecutively, counting modulo-8, and each must be acknowledged by number. In the usual bar code reading transaction, the packets 17 and 18 will be of 22-bytes or less, so the function of the record and acknowledge counting will be of less importance. Following the header 73, a data field 78 of 0-to-22 bytes is transmitted, and a CRC field 79 concludes the packet. The CRC field contains a calculated function of all the bits of the header field 73 and data field 78 for CRC checking; if the receiving device (remote unit 15 or base station) receives a packet 17 or 18 but the CRC calculation of what is received does not agree with the CRC field 79 received, the packet is discarded and not acknowledged, so it will be resent by the transmitting device after a timeout period. As illustrated in Figure 7, the portion of a packet 17 or 18 after the start symbol 72 is from seven to twenty-nine bytes long; if data to be sent exceeds 22-bytes, then a code can be included in the field 75 (a value above twenty-three) to indicate more is coming.

According to one embodiment, at least some of the acknowledge packets 18 from a base station contain an identification, such as bit map or a list of the IDs of remote terminals 15 (for which message are awaiting transmission), in the header or data field 78 of Figure 7 as described above with reference to Figures 2a and 2b. A selected code in the 5-bit field 75 may be used to indicate that the data field of a packet 18 contains message-waiting bit map or ID numbers.

The remote unit 15 does not have to execute extensive computations while it is either transmitting or receiving packets 17 or 18. Instead, the packet 17 is completely made up in the memory 41 before the transceiver 44 is activated, then during the fixed receive window for the packet 18 the incoming data is merely copied to the memory 41 without interpretation, so all decoding or computation is done after the exchange. This remote unit need not be concerned about receiving any further messages from a base station until the remote unit is ready. The remote unit 15 manages or schedules its own packet communication operations, instead of being a slave of the host or base stations. The base stations 12, 13 and 14, on the other hand, must be ready to receive one of the exchanges of Figure 2 at any time, so the transceiver 34 must be activated at all times, then when a packet 17 is received it must be immediately decoded, checked, acknowledged by a packet 18, and data sent on to the host computer 10; when a reply message is sent back to this base station from the host computer 10 it must be formatted and stored in memory 31 ready to send back to the remote unit 15 when another exchange of Figure 2 is initiated by that remote unit 15. During this time, packets 17 may be received from other remote units, and these must be acknowledged with a packet 18 at the 5-msec timing of Figure 2. Accordingly, the base stations have a much greater computation burden imposed upon the CPU 30, compared to the CPU 40 in a remote unit, and the RF transceiver 34 must operate continuously and recognize incoming signals at any time rather than being off most of the time. The transceiver 34 cannot merely save the received data in memory then shut itself off (the data being evaluated later by the CPU), as is done in the remote units 15.

The spread-spectrum RF transmission used in a preferred embodiment for the RF link between remote units and base stations will be described according to one feature of the invention.

The RF transmission method used for the packets 17 and 18 of Figures 2 and 7, i.e., all packets or replies sent between remote units 15 and base stations 12, 13 and 14, (or RF communication between base stations if this method is used) utilizes the spread spectrum RF modulation technique, i.e., the transmitted signal is spread over a wide frequency band, much wider than the bandwidth required to send the digital information in the packets 17 and 18. Reference is made to R. C. Dixon, "Spread Spectrum Systems", published by Wiley & Sons, 1976, for details of design, construction and operation of this type of RF equipment. A carrier is frequency modulated in the transceivers 44 or 34 by a digital code sequence (stored in memory 41 or memory 31) whose bit rate is much higher than the information signal bandwidth. The information signal bandwidth during one of the packets 17 or 18 is only about 60-KHz (29-bytes of data in about 4-msec in this example). But instead of merely transmitting the 29-byte data packet in its straightforward form, the data to be sent is first expanded or spread to replace each single bit of data with an 11-bit set. That is, each binary "1" becomes "11111111111" and each binary "0" becomes "00000000000"; in the remote unit this expansion is done in the memory 41, by a routine executed by CPU 40, or in the base station it is done in the memory 31 by code executed by the CPU 30. The 11-bit-for-one spreading factor is chosen as a compromise of various RF bandwidth considerations and the like; other spreading factors could be used, but the F.C.C. requires at least a ten-to-one spread so this 11-to-1 is about the minimum. In any event, the 29-bytes or 232-bits of data becomes 11x232 or 2552 bits in memory 41, plus the 48-bit start symbol, resulting in a 2600-bit message length (maximum) in memory 41. Next, this expanded data is combined (exclusive-ORed) with a pseudorandom binary code value before being used to modulate the carrier; this binary code value is also stored in the memory 41, and the exclusive-OR logic function used to combine the data and code is implemented by instructions executed by the CPU 40 accessing the memory 41. The pseudorandom binary code value chosen is unique to this network, and may be changed under control of the host computer for security or to avoid crosstalk if other networks are operating in overlapped areas. The length of the pseudorandom binary code value, i.e., number of bits before repeating, must be at least 127-bits according to F.C.C. regulations for spread-spectrum transmission in this band; above this value, the length of the pseudorandom code is chosen depending upon security and computation time constraints, and in this example embodiment a value of greater than 2600 is used so there is no repeat during a message frame. The coded data is applied from the memory 41 to the RF transceiver 44 via the bus 42 in parallel or serial format, and the data is used in the transceiver 44 to modulate a carrier in the FSK manner, i.e., each binary "1" causes a voltage-controlled oscillator to operate at one frequency, and each binary "0" causes the oscillator to operate at another preselected frequency. The band specified by the F.C.C. for this type of unregulated and unlicensed use is 902 to 928 Mhz, so the oscillator uses a pair of frequencies in this band; as required by the F.C.C. these frequencies are at least one-half the baud rate apart. Each "channel" in this example uses about 0.4 MHz bandwidth, and the channels are 1-MHz apart. The spread spectrum modulation technique chosen for this embodiment of the invention may be characterized as "narrow-band direct sequence", in that the bandwidth of the spread is relatively narrow, about 666,667 chips per second rate, where a "chip" is a discrete signal frequency output from either of the transceivers 34 or 44. That is, the RF transmitted frequency is switched between two discrete frequencies, in this case switching (or potentially switching, depending upon the binary data) every 1.5 microsecond, each of these 1.5 microsecond periods being called a "chip". The RF transceivers are able to operate at a number of different carrier frequencies or "channels" within the band of 902-928 MHz (for example, sixteen different carrier frequencies) so that interference on any particular frequency may be avoided by merely changing to a different frequency, but the transceivers will tend to stay on a single frequency for prolonged periods of time when there is no need to change.

Referring to Figure 8a, the transmitted signal from a remote unit 15 to base station, or return, is seen to be frequency modulated in a manner to switch between two frequencies, but to dwell at one of these frequencies for a period 80 or "chip" of 1.5 microsecond for this example. This signal is detected and demodulated to produce an analog output voltage as seen in Figure 8b. The demodulation produces a logic "1" whenever the signal is above a threshold 81 (corresponding to one of the frequencies), or a logic "0" whenever the signal is below this threshold (corresponding to the other of these two frequencies). This detected binary signal is sampled at three times the "chip" rate of 666,667 Hz, i.e., sampled at 2-MHz, producing three "sets" of binary strings A, B and C as seen in Figure 8c. These three sets are loaded to memory 41 in the remote unit 15 for processing after the packet 18 is received, or examined in a highspeed decoder in the base station in real time as the packet 17 starts to come in. Each one of the sets A, B or C, is tried for a pattern fit by being exclusive-ORed with the first 44-chip pattern (which corresponds to the start symbol 72 of Figure 7) of the same pseudorandom binary code value used for encoding upon transmission, to see if the 44-bit start symbol 72 is present - if so, the immediately-following chips will upon decoding produce 11-bit strings of "1's" or "0's". Note that the 44-bit start symbol is accepted as "good" even if only about 35-of-44 bits or more match, because the probability of 35-of-44 being a valid transmission instead of noise or a crosstalk signal is very high (for random noise, 22-of-44 will be valid, on average). Likewise, the algorithm used to decode and despread the data part of the message frame or packet may be configured to accept less than full 11-bit strings, i.e., if one or two bits are wrong, there is still a high probability that the data is good, and so the string is accepted as a valid bit anyway.

The transceivers 34 and 44 in the remote unit 15 and base station, as well as a flow chart of examples of a type of program executed by the CPU 40 in the remote unit 15 or in the CPU 30 of the base station, are shown in more detail in Pat. 5,029,183.

A hand-off protocol is used to assign each remote unit 15 to a specific base station. It is essential that only one base station 12, 13 or 14 be assigned to a remote unit 15 at a given time; otherwise two base stations might respond simultaneously to a packet 17 when a remote unit attempts an exchange and the two acknowledge packets 18 would interfere with each other. Before any base station will respond to a remote unit at all, the base station must receive the serial number or device ID for a remote unit 15 from the host computer 10 via link 11 and make a table entry in its memory 31. All base stations receive this same number from the host, but only one base station arbitrarily assigns itself to this remote unit using some algorithm; for example, the base stations may merely select remote units based upon the serial numbers or device IDs. If a base station receives a packet 17 from one of its remote units (having the device ID corresponding to one in its list), this base station sends an acknowledge packet 18 responding to the exchange and records in its memory 31 the time and quality (number of errors) of the data packet 17. Any of the other base stations also receiving this packet 17 of the exchange from this remote unit merely record the time and quality. Every minute or so, each base station publishes (sends to the other base stations via link 11) the list of remote units it has heard from in the last minute and the quality. If another base station has a much higher quality rating than the one initially assigned, the assignment for this particular remote unit moves by messages exchanged between the two base stations involved. At any one time, each base station has in memory a list of the serial numbers (or ID numbers) of the remote units it will respond to, and whenever a packet 17 is received the ID number in the field 74 is compared to the list in memory to see whether a response packet 18 is to be sent from this base station.

A feature of one embodiment of Patent 5,0289,183 is the measurement of the quality factor of the received packets 17 at the base stations 12, 13 and 14. As noted above, this quality factor is used in determining which remote unit is assigned to which base station, either initially, or in periodic realignments, or upon a distress call. The quality factor is the number of valid bits resulting from the decode of the 44-bit start symbol 72 at the decoder 117; the packet is accepted as good data even if the number of valid bits found when comparing the incoming symbol 72 with a stored version of the correct pseudo-random code is (in the example) 35-of-44, but this number is saved in memory 31 even if it is in the 35-to-44 range and is used to determine which base station is getting the best signal from a given remote unit. That is, the assigned base station may be able to receive and decode the incoming packets quite adequately, but it may be averaging a quality factor of thirty-eight, whereas another base station may be receiving these same packets with a quality factor of forty-four, so obviously the later is in a more favorable receiving situation with respect to the remote unit in question and so the next time a set of messages are exchanged between base stations, the baton should be passed to the base station receiving better quality.

While the invention has been described with reference to specific embodiments, the description is not meant to be construed in a limiting sense. Various modifications of the disclosed embodiments, as well as other embodiments of the invention, will be apparent to persons skilled in the art upon reference to this description. It is therefore contemplated that the appended claims will cover any such modifications or embodiments as fall within the true scope of the invention.

## Claims

1. A method of operating a communication system which has a base station (12, 13, 14) and a plurality of remote units (15), comprising the steps of:
a) sending from said base station (12, 13, 14) an announcement message (18) being part of a routine response to a remote unit (15) and having an identification of particular ones of said remote units (15) which have data messages waiting at said base station (12, 13, 14) for transmission to said particular ones;
b) intermittently turning on a receiver (44) at each one of said remote units (15) to receive said announcement message (18);
c) sending from each one of said particular ones of said remote units (15) to said base station (12, 13, 14) an inquiry message (17) at a time selected by each respective remote unit (15); and
d) sending a data message (18) from said base station (12, 13, 14) to each one of said particular ones of said remote units (15).

2. A method according to claim 1 wherein said base station (12, 13, 14) and said remote units (15) send and receive said messages by RF transmission and reception.

3. A method according to claim 2 wherein said RF is spread spectrum.

4. A method according to claim 1 wherein said remote units (15) send message packets (17) to said base station (12, 13, 14) at times of their own choosing, and said base station (12, 13, 14) responds to a message packet (17) from a remote unit (15) within no more than a fixed interval of time.

5. A method according to claim 1 wherein said remote units (15) each send said inquiry messages (17) in randomly selected times so that collisions of said inquiry messages (17) are minimized.

6. A method according to claim 1 wherein said identification of particular ones is by a bit-map specifying remote units (15) by assigned bits in a bit field.

7. A method according to claim 1 wherein said step of intermittently turning on a receiver (44) of said remote unit (15) is at a selected time interval, and said time interval is adjustable in response to predetermined conditions.

8. A method according to any of the preceding claims, wherein said step c) comprises:
transmitting said inquiry message (17) in the form of a first data packet (17) from said remote unit (15) beginning at a first time selected by the remote unit (15); and
wherein said step d) comprises:
activating said receiver (44) to receive at said remote unit (15) said data message (18) in the form of a second packet (18) from said base station (12, 13, 14) during a second time period occurring only during a time interval after said first time, the second packet (18) including an identification of particular ones of said remote units (15) for which messages are waiting to be sent by the base station (12, 13, 14).

9. A method of according to claim 8 wherein said second packet (18) is sent by said base station (12, 13, 14) only in response to a first data packet (17) sent by said remote units (15).

10. A method according to claim 8 or 9 wherein a third packet is sent by said base station (12, 13, 14) after a fixed period during which there have been no data packets transmitted from any of said remote units (15), said third packet including an identification of particular ones of said remote units (15) for which messages are waiting to be sent by said base station (12, 13, 14).

11. A method according to claim 8, wherein said step c) comprises:
transmitting first data packets (17) from one of said remote units (15) beginning at first times selected by said one remote unit (15); and
wherein said step d) comprises:
receiving at said remote unit (15) second packets (18) from said base station (12, 13, 14), said second packets (18) being received during a second time period occurring only in a selected time window after one of said first times, at least some of the second packets (18) including an identification of selected ones of said remote units (15) for which messages are waiting to be sent by said base station (12, 13, 14).

12. A method according to claim 11 including the step of periodically transmitting by said base station (12, 13, 14) one of said second packets (18) containing said identification and not in response to a first packet (17), if no first packets are received during a selected time period.

13. A method according to claim 12 wherein said steps of receiving are performed by said receiver (44) which is activated only during said time window and during a time of said periodically transmitting.

14. A communication system having a base station (12, 13, 14) and a plurality of remote units (15), comprising:
a) means (30-35) for sending from said base station (12, 13, 14) an announcement message (18) being part of a routine response to a remote unit (15) and having an identification of particular ones of said remote units (15) which have data messages waiting at said base station (12, 13, 14) for transmission to said particular ones;
b) means (40) for intermittently turning on a receiver (44) at each one of said remote units (15) to receive said announcement message (18);
c) means (40, 44, 45) for sending from each one of said particular ones of said remote units (15) to said base station (12, 13, 14) an inquiry message (17) at times selected by each respective remote unit (15); and
d) means (30-35) for sending a data message (18) from said base station (12, 13, 14) to each one of said particular ones of said remote units (15).

15. A communication system according to claim 14 wherein said base station (12, 13, 14) and said remote units (15) are adapted to send and receive said messages by RF transmission and reception.

16. A communication system according to claim 15 wherein said RF is spread spectrum.

17. A communication system according to claim 14 wherein said remote units (15) are adapted to send message packets (17) to said base station (12, 13, 14) at times of their own choosing, and said base station (12, 13, 14) is adapted to respond to a message packet (17) from a remote unit (15) within no more than a fixed interval of time.

18. A communication system according to claim 14 wherein said remote units (15) each are adapted to send said inquiry messages (17) in randomly selected times so that collisions of said inquiry messages are minimized.

19. A communication system according to claim 14 wherein said identification of particular ones of said remote units (15) is by a bit-map specifying remote units (15) by assigned bits in a bit field.

20. A communication system according to claim 14 wherein said means (40) for intermittently turning on said receiver (44) of said remote unit (15) is adapted to operate at a selected time interval, and said time interval is adjustable in response to predetermined conditions.

21. A communication system according to any of claims 14-20 wherein said remote units (15) are hand-held data-gathering units which include manual control elements, and wherein at least some of said remote units (15) include bar-code reading devices.

## Patentansprüche

1. Verfahren zum Betrieb eines Nachrichtensystems mit einer Basisstation (12, 13, 14) und einer Vielzahl von entfernt gelegenen Einheiten (15), wobei die folgenden Schritte vorgesehen sind:
a) Aussenden von der Basisstation (12, 13, 14) einer Ankündigungsnachricht (18), die Teil eines Routineansprechens zu einer entfernt gelegenen Einheit (15) ist, und eine Identifikation von bestimmten Einheiten der entfernt gelegenen Einheiten (15) besitzt, die an der Basisstation (12, 13, 14) wartende Datennachrichten zur Übertragung an die erwähnten entfernt gelegenen Einheiten hat;
b) intermittierendes Einschalten eines Empfängers an jeder der entfernt gelegenen Einheiten (15) zum Empfang der Ankündigungsnachricht (18);
c) Aussenden einer Nachfragenachricht (17) von jeder der erwähnten bestimmten Einheiten der entfernt gelegenen Einheiten (15) zur Basisstation (12, 13, 14), und zwar zu einer Zeit ausgewählt durch jede entsprechende entfernt gelegene Einheit (15);
d) Senden einer Datennachricht (18) von der Basisstation (12, 13, 14) zu jeder der bestimmten Einheiten von den erwähnten entfernt gelegenen Einheiten (15).

2. Verfahren nach Anspruch 1, wobei die Basisstation (12, 13, 14) und die entfernt gelegenen Einheiten (15) die erwähnten Nachrichten durch HF Sendung und Empfang senden und empfangen.

3. Verfahren nach Anspruch 2, wobei die HF ein Spreizspektrum besitzt.

4. Verfahren nach Anspruch 1, wobei die entfernt gelegenen Einheiten (15) Nachrichtenpakete (17) zu der Basisstation (12, 13, 14) senden, und zwar zu Zeiten der eigenen Wahl, und wobei die Basisstation (12, 13, 14) auf ein Nachrichtenpaket (17) von einer entfernt gelegenen Einheit (15) innerhalb von nicht mehr als einem festen Zeitintervall anspricht bzw. antwortet.

5. Verfahren nach Anspruch 1, wobei die entfernt gelegenen Einheiten (15) jeweils die erwähnten Nachfragenachrichten (17) zu zufällig ausgewählten Zeiten senden, so daß Kollisionen der Nachfragenachrichten (17) minimiert werden.

6. Verfahren nach Anspruch 1, wobei die erwähnte Identifikation von bestimmten entfernt gelegenen Einheiten durch eine entfernt gelegene Einheit (15) spezifizierenden Bit-Karte erfolgt, und zwar durch zugewiesene Bits in einem Bitfeld.

7. Verfahren nach Anspruch 1, wobei der Schritt des intermittierenden Anschaltens des Empfängers (44) der erwähnten entfernt gelegenen Einheit (15) an einem ausgewählten Zeitintervall vorgesehen ist, und wobei das erwähnte Zeitintervall ansprechend auf die vorbestimmten Bedingungen einstellbar ist.

8. Verfahren nach einem der vorhergehenden Ansprüche, wobei der Schritt c) folgendes aufweist:
Übertragen einer Nachfragenachricht (17) in der Form eines ersten Datenpakets (17) von der erwähnten entfernt gelegenen Einheit (15), und zwar beginnend zu einer ersten Zeit ausgewählt durch die entfernt gelegene Einheit (15); und
wobei der Schritt d) folgendes aufweist:
Aktivieren des Empfängers (44) zum Empfang an der erwähnten entfernt gelegenen Einheit (15) der erwähnten Datennachricht (18) in der Form eines zweiten Pakets (18) von der Basisstation (12, 13, 14) während einer zweiten Zeitperiode, die nur während eines Zeitintervalls nach der ersten Zeit auftritt, wobei das zweite Paket (18) eine Identifikation von bestimmten Einheiten der erwähnten entfernt gelegenen Einheiten (15) umfaßt, und zwar für die Einheiten, für die Nachrichten warten, um durch die Basisstation (12, 13, 14) gesendet zu werden.

9. Verfahren nach Anspruch 8, wobei das zweite Paket (18) durch die erwähnte Basisstation (12, 13, 14) nur ansprechend auf ein erstes Datenpaket (17) gesendet durch die erwähnten entfernt gelegenen Einheiten (15) gesendet wird.

10. Verfahren nach Anspruch 8 oder 9, wobei ein drittes Paket durch die Basisstation (12, 13, 14) gesendet wird, und zwar nach einer festen Periode, während welcher keine Datenpakete von irgendeiner der entfernt gelegenen Einheiten (15) gesendet wurden, wobei das dritte Paket eine Identifikation von bestimmten Einheiten der erwähnten entfernt gelegenen Einheiten (15) aufweist, für die Nachrichten warten, die durch die Basisstation (14) zu senden sind.

11. Verfahren nach Anspruch 8, wobei der Schritt c) folgendes aufweist:
Senden oder Übertragen von ersten Datenpaketen (17) von einer der erwähnten entfernt gelegenen Einheiten (15), und zwar beginnend zu ersten Zeiten ausgewählt durch die erwähnte eine entfernt gelegene Einheit (15); und
wobei der Schritt d) folgendes aufweist:
Empfangen an der entfernt gelegenen Einheit (15) von zweiten Paketen (18) von der Basisstation (12, 13, 14), wobei die zweiten Pakete (18) während einer zweiten Zeitperiode empfangen werden, die nur in einem ausgewählten Zeitfenster nach einer der erwähnten ersten Zeiten erfolgt, wobei mindestens einige der zweiten Pakete (18) eine Identifikation aufweisen, und zwar eine Identifikation von ausgewählten Einheiten der erwähnten entfernt gelegenen Einheiten (15), für welche durch die Basisstation (12, 13, 14) zu sendende Nachrichten warten.

12. Verfahren nach Anspruch 11 einschließlich des Schrittes des periodischen Sendens von einem der die Identifikation enthaltenden Datenpakete (18) durch die Basisstation (12, 13, 14) und nicht ansprechend auf ein erstes Paket (17), wenn keine ersten Pakete während einer ausgewählten Zeitperiode empfangen werden.

13. Verfahren nach Anspruch 12, wobei die Schritte des Empfangens durch den Empfänger (44) ausgeführt werden, der nur während des erwähnten Zeitfensters und während einer Zeit des erwähnten periodischen Sendens aktiviert wird.

14. Ein Nachrichtensystem mit einer Basisstation (12, 13, 14) und einer Vielzahl von entfernt gelegenen Einheiten (15), wobei folgendes vorgesehen ist:
a) Mittel (30-35) zum Senden von der Basisstation (12, 13, 14) einer Ankündigungsnachricht (18) als Teil eines Routineansprechens zu einer entfernt gelegenen Einheit (15), und zwar mit einer Identifikation von bestimmten Einheiten der erwähnten entfernt gelegenen Einheiten (15), die an der Basisstation (12, 13, 14) zur Übertragung an die erwähnten bestimmten Einheiten Datennachrichten wartend besitzen;
b) Mittel (40) zum intermittierenden Einschalten eines Empfängers (44) an jeder der entfernt gelegenen Einheiten (15) zum Empfang der Ankündigungsnachricht (18);
c) Mittel (40, 44, 45) zum Senden von jeder der erwähnten bestimmten Einheiten der entfernt gelegenen Einheiten (15) von einer Anfragenachricht (17) zur Basisstation (12, 13, 14), und zwar an durch jede entsprechende entfernt gelegene Einheit (15) ausgewählten Zeiten; und
d) Mittel (30-35) zum Senden einer Datennachricht (18) von der Basisstation (12, 13, 14) zu jeder Einheit der bestimmten Einheiten der entfernt gelegenen Einheiten (15).

15. Nachrichtensystem nach Anspruch 14, wobei die Basisstation (12, 13, 14) und die entfernt gelegenen Einheiten (15) geeignet sind, die erwähnten Nachrichten durch HF Sendung und Empfang zu senden und zu empfangen.

16. Nachrichtensystem nach Anspruch 15, wobei die HF ein Spreizspektrum ist bzw. besitzt.

17. Nachrichtensystem nach Anspruch 14, wobei die entfernt gelegenen Einheiten (15) geeignet sind, Nachrichtenpakete (17) zur Basisstation (12, 13, 14) zu senden, und zwar zu Zeiten der eigenen Wahl, und wobei die Basisstation (12, 13, 14) geeignet ist, auf ein Nachrichtenpaket (17) von einer entfernt gelegenen Einheit (15) innerhalb von nicht mehr als einem festgelegten Zeitintervall anzusprechen.

18. Nachrichtensystem nach Anspruch 14, wobei die entfernt gelegenen Einheiten (15) jeweils geeignet sind, um die Anfragenachrichten (17) zu zufallsmäßig ausgewählten Zeiten derart zu senden, daß Kollisionen der Anfragenachrichten minimiert werden.

19. Nachrichtensystem nach Anspruch 14, wobei die erwähnte Identifikation von bestimmten Einheiten der entfernt gelegenen Einheiten (15) durch eine Bitkarte erfolgt, die entfernt gelegene Einheiten (15) durch zugewiesene Bits in einem Bitfeld spezifiziert.

20. Nachrichtensystem nach Anspruch 14, wobei die Mittel (40) zum intermittierenden Einschalten des Empfängers (44) der entfernt gelegenen Einheit (15) geeignet sind, zu einem ausgewählten Zeitintervall zu arbeiten, und wobei das Zeitintervall ansprechend auf die vorbestimmten Bedingungen einstellbar ist.

21. Nachrichtensystem nach einem der Ansprüche 14-20, wobei die entfernt gelegenen Einheiten (15) in der Hand zu haltende Daten erfassende Einheiten sind, die manuelle Steuerelemente aufweisen und wobei mindestens eine der entfernt gelegenen Einheiten (15) Strich- oder Barcode-Lesevorrichtungen aufweisen.

## Revendications

1. Procédé d'actionnement d'un système de communication qui comporte une station de base (12, 13, 14) et une pluralité de modules éloignés (15), comprenant les étapes suivantes :
a) envoyer à partir de la station de base (12, 13, 14) un message d'annonce (18) faisant partie d'une réponse de routine à un module éloigné (15) et recevoir une identification de ceux particuliers des modules éloignés (15) qui ont des messages de données en attente au niveau de la station de base (12, 13, 14) pour transmission vers ses modules particuliers ;
b) connecter de façon intermittente un récepteur (44) à chacun des modules éloignés (15) pour recevoir un message d'annonce (18) ;
c) envoyer à partir de chacun des modules éloignés (15) particuliers vers la station de base (12, 13, 14) un message d'interrogation (17) à un instant sélectionné par le module éloigné (15) respectif ; et
d) envoyer un message de données (18) à partir de la station de base (12, 13, 14) vers chacun particulier des modules éloignés (15) particuliers.

2. Procédé selon la revendication 1, dans lequel la station de base (12, 13, 14) et les modules éloignés (15) envoient et reçoivent des messages par émission et réception RF.

3. Procédé selon la revendication 2, dans lequel la RF est du type à étalement de spectre.

4. Procédé selon la revendication 1, dans lequel les modules éloignés (15) envoient des paquets de messages (17) à la station de base (12, 13, 14) à des instants qui choisissent, et la station de base (12, 13, 14) répond à un paquet de messages (17) en provenance d'un module éloigné (15) à l'intérieur d'un intervalle de temps fixe.

5. Procédé selon la revendication 1, dans lequel les modules éloignés (15) envoient chacun des messages d'interrogation (17) à des instants choisis de façon aléatoire de sorte que des collisions des messages d'interrogation (17) sont minimisées.

6. Procédé selon la revendication 1, dans lequel l'identification des modules particuliers se fait par un mappage de bits spécifiant des modules éloignés (15) par des bits affectés dans un champ de bit.

7. Procédé selon la revendication 1, dans lequel l'étape consistant à connecter de façon intermittente un récepteur (44) du module éloigné (15) se fait à un intervalle de temps choisi et cet intervalle de temps est réglable en réponse à des conditions prédéterminées.

8. Procédé selon l'une quelconque des revendications précédentes, dans lequel l'étape c) comprend :
émettre le message d'interrogation (17) sous forme d'un premier paquet de données (17) en provenance du module éloigné (15) en commençant à un premier instant choisi par le module éloigné (15) ; et
dans lequel l'étape d) comprend :
activer le récepteur (44) pour recevoir au niveau du module éloigné (15) le message de données (18) sous forme d'un second paquet (18) en provenance de la station de base (12, 13, 14) dans une seconde durée survenant seulement pendant un intervalle de temps après le premier instant, le second paquet (18) comprenant une identification des modules éloignés (15) particuliers pour lesquels des messages attendent d'être envoyés par la station de base (12, 13, 14).

9. Procédé selon la revendication 8, dans lequel le second paquet (18) est envoyé par la station de base (12, 13, 14) seulement en réponse à un premier paquet de données (17) envoyé par les modules éloignés (15).

10. Procédé selon la revendication 8 ou 9, dans lequel un troisième paquet est envoyé par la station de base (12, 13, 14) après une durée fixe pendant laquelle il n'y a pas eu de paquets de données émis à partir de l'un quelconque des modules éloignés (15), le troisième paquet comprenant une identification des modules éloignés (15) particuliers pour lesquels des messages attendent d'être envoyés par la station de base (12, 13, 14).

11. Procédé selon la revendication 8, dans lequel :
l'étape c) comprend : émettre des premiers paquets de données (17) à partir de l'un des modules éloignés (15) en commençant à des premiers instants choisis par ledit module éloigné (15) ; et
dans lequel l'étape d) comprend : recevoir au niveau du module éloigné (15) des seconds paquets (18) en provenance de la station de base (12, 13, 14), les seconds paquets (18) étant reçus pendant une seconde durée survenant seulement à l'intérieur d'une fenêtre temporelle choisie après l'un des premiers instants, au moins certains des seconds paquets (18) comprenant une identification de ceux choisis des modules éloignés (15) pour lesquels des messages attendent d'être envoyés par la station de base (12, 13, 14).

12. Procédé selon la revendication 11, comprenant l'étape consistant à émettre périodiquement à partir de la station de base (12, 13, 14) l'un des seconds paquets (18) contenant l'identification et non pas en réponse à un premier paquet (17), si aucun premier paquet n'est reçu pendant une durée déterminée.

13. Procédé selon la revendication 12, dans lequel les étapes de réception sont réalisées par le récepteur (44) qui est activé seulement pendant la fenêtre temporelle et pendant une durée de l'émission périodique.

14. Système de communication comprenant une station de base (12, 13, 14) et une pluralité de modules éloignés (15), comprenant :
a) des moyens (30-35) pour envoyer à partir de la station de base (12, 13, 14) un message d'annonce (18) faisant partie d'une réponse de routine à un module éloigné (15) et ayant une identification de ceux particuliers des modules éloignés (15) qui ont des messages de données en attente au niveau de la station de base (12, 13, 14) pour émission vers ces modules particuliers ;
b) des moyens (40) pour connecter de façon intermittente un récepteur (44) au niveau de chacun des modules éloignés (15) pour recevoir le message d'annonce (18) ;
c) des moyens (40, 44, 45) pour envoyer à partir de chacun des modules éloignés (15) particuliers vers la station de base (12, 13, 14) mais un message d'interrogation (17) à des instants choisis par chaque module éloigné (15) respectif ; et
d) des moyens (30-35) pour envoyer un message de données (18) à partir de la station de base (12, 13, 14) vers chacun des modules éloignés (15) particuliers.

15. Système de communication selon la revendication 14, dans lequel la station de base (12, 13, 14) et les modules éloignés (15) sont adaptés à envoyer et recevoir les messages par émission et réception RF.

16. Système de communication selon la revendication 15, dans lequel le signal RF est du type à étalement de spectre.

17. Système de communication selon la revendication 14, dans lequel les modules éloignés (15) sont adaptés à envoyer des paquets de messages (17) vers la station de base (12, 13, 14) à des instants qu'ils choisissent, et la station de base (12, 13, 14) est adaptée à répondre à un paquet de message (17) en provenance d'un module éloigné (15) à l'intérieur d'un intervalle de temps déterminé.

18. Système de communication selon la revendication 14, dans lequel les modules éloignés (15) sont chacun adaptés à envoyer des messages d'interrogation (17) à des instants choisis aléatoires de sorte que les collisions entre messages d'interrogation sont minimisées.

19. Système de communication selon la revendication 14, dans lequel l'identification de ceux particuliers des modules éloignés (15) est fait par un mappage de bit spécifiant des modules éloignés (15) par des bits affectés dans un champ de bit.

20. Système de communication selon la revendication 14, dans lequel les moyens (40) pour connecter de façon intermittente le récepteur (44) du module éloigné (15) est adapté à fonctionner à un intervalle de temps choisi et l'intervalle de temps est réglable en réponse à des conditions prédéterminées.

21. Système de communication selon la revendication 14 à 20, dans lequel les modules éloignés (15) sont des modules portables de recueil de données qui incluent des éléments de commande manuelle et dans lequel au moins certains des modules éloignés (15) comprennent des dispositifs de lecture de code barre.
